# EUROPEAN PATENT SPECIFICATION

(11) **EP 3 358 268 B1**
(45) Date of publication and mention of the grant of the patent: **04.11.2020**
(21) Application number: 18154820.7
(22) Date of filing: 02.02.2018
(51) Int. Cl.: F24F 12/00, F24F 110/40

(54) **MECHANICAL VENTILATION HEAT RECOVERY UNIT**
MECHANISCHE BELÜFTUNGSEINHEIT MIT WÄRMERÜCKGEWINNUNG
UNITÉ DE RÉCUPÉRATION DE CHALEUR PAR VENTILATION MÉCANIQUE

(30) Priority: 02.02.2017 GB 201701754
(43) Date of publication of application: 08.08.2018
(73) Proprietor: Vent-Axia Group Limited, Crawley, West Sussex RH10 9YX (GB)
(72) Inventor: BLAMEY, David, Crawley, West Sussex RH10 9YX (GB); COX, Ian, Crawley, West Sussex RH10 9YX (GB); MOSS, Paul, Crawley, West Sussex RH10 9YX (GB)
(74) Representative: Lock, Graham James

(56) References cited:
- EP-A1- 2 101 137
- FR-A1- 3 003 350
- US-A1- 2013 197 829
- US-B1- 6 209 622

## Description

The present invention relates to a mechanical ventilation heat recovery unit. Various mechanical ventilation heat recovery units are available, and the present invention aims to provide an improved unit.

US-A-6209622 discloses an apparatus for ventilation systems which include an element for the transfer of heat from warm exhaust air (taken from inside a building) to cooler exterior fresh air which is drawn into the building. US-A-6209622 thereby discloses a mechanical ventilation unit according to the preamble of claim 1.

EP-A-2101137 discloses a rotary heat exchanger which comprises a clean fluid duct and a polluted fluid duct separated by a separating wall, with suction means being arranged to draw fluid through the ducts.

FR-A-3003350 discloses an arrangement of a pressure tap of a device for measuring a pressure in a centrifugal fan, the fan comprising an impeller, an axial air inlet and a radial air outlet, and the pressure tap comprising a small diameter tube with two opposite ends and small radial holes pierced at the periphery near one of the two ends.

US-A-2013/0197829 discloses a sensing system and method for use with a gas filter in a gas conduit attached to a gas blower, having a motor for producing a first gas flow blower speed, discards readings taken when the blower is off or during blower startup and shutdown, and recalculates a clog threshold in response to changes in the fan speed of a multi-speed blower.

In one aspect the present invention provides a mechanical ventilation heat recovery unit according to claim 1.

In one embodiment the flow measurement system comprises first to fourth pressure detectors for separately detecting the pressures (Pa, Pb, Pc, Pd) at respective ones of the first to fourth pressure taps.

In another embodiment the flow measurement system comprises one or more pressure detectors for selectively detecting the pressures (Pa, Pb, Pc, Pd) at respective ones of the first to fourth pressure taps.

In one embodiment the inlet chamber of the first flow path includes a first filter upstream of the first pressure tap, the flow measurement system comprises a fifth pressure tap in the inlet chamber of the first flow path at a location upstream of the first filter, and the at least one pressure detector detects the pressure (Pe) at the fifth pressure tap, with the state of the first filter being determined from the pressure differential (ΔP3) between the first and fifth pressure taps.

In one embodiment the flow measurement system comprises a fifth pressure detector for detecting the pressure at the fifth pressure tap.

In one embodiment the inlet chamber of the second flow path includes a second filter upstream of the third pressure tap, the flow measurement system comprises a sixth pressure tap in the inlet chamber of the second flow path at a location upstream of the second filter, and the at least one pressure detector detects the pressure (Pf) at the sixth pressure tap, with the state of the second filter being determined from the pressure differential (ΔP4) between the first and sixth pressure taps.

In one embodiment the flow measurement system comprises a sixth pressure detector for detecting the pressure at the sixth pressure tap.

In one embodiment the heat exchanger is a plate-type heat exchanger.

In one embodiment the first and second flow paths are fluidly isolated.

In one embodiment the channel is an elongate linear channel, optionally projecting substantially orthogonally to the adjacent surface of the respective inlet or outlet chamber.

In one embodiment the channel has a closed distal end, and at least one sensing aperture, which opens substantially radially.

In one embodiment the at least one sensing aperture is located proximal to the distal end of the channel, optionally by a distance of at least 10 mm.

In one embodiment the at least one sensing aperture has a radial dimension which is smaller than a radial dimension of the channel.

In one embodiment the at least one sensing aperture has a radial dimension of between 1 mm and 3 mm.

In one embodiment the channel has a plurality of sensing apertures.

In one embodiment the sensing apertures are disposed in spaced relation about the periphery of the channel.

In one embodiment the channel has a radial dimension of between 2 mm and 5 mm.

Preferred embodiments of the present invention will now be described hereinbelow by way of example only with reference to the accompanying drawings, in which:

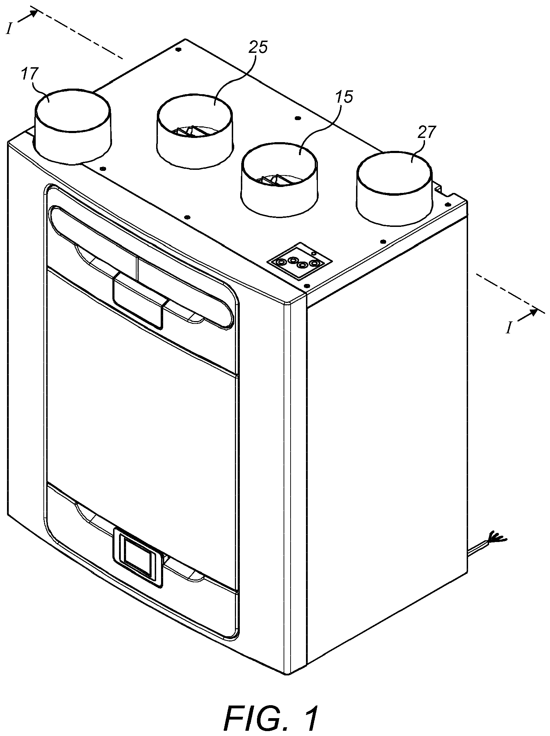

Figure 1 illustrates a perspective view of a mechanical ventilation heat recovery unit in accordance with one embodiment of the present invention;

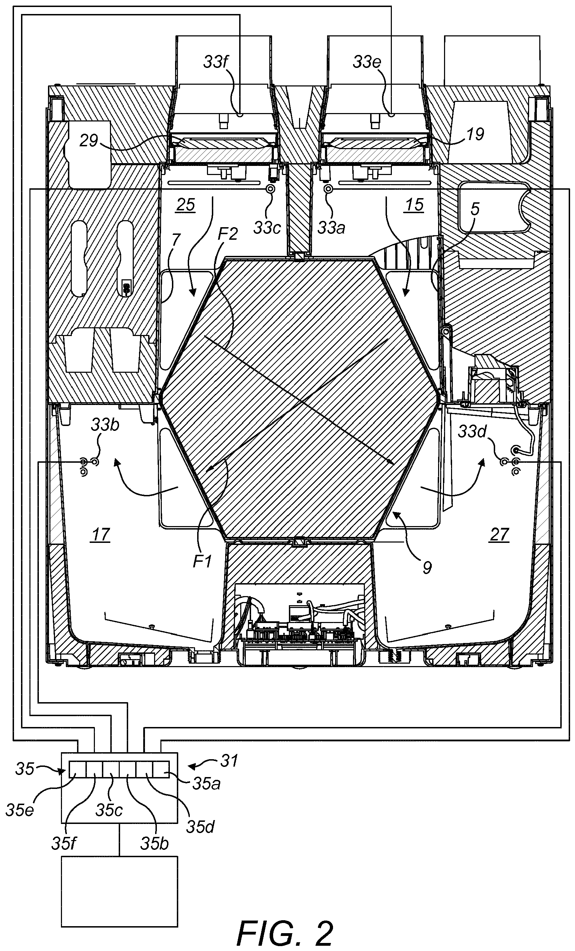

Figure 2 illustrates a vertical sectional view (along section I-I in Figure 1) of the mechanical ventilation heat recovery unit of Figure 1;

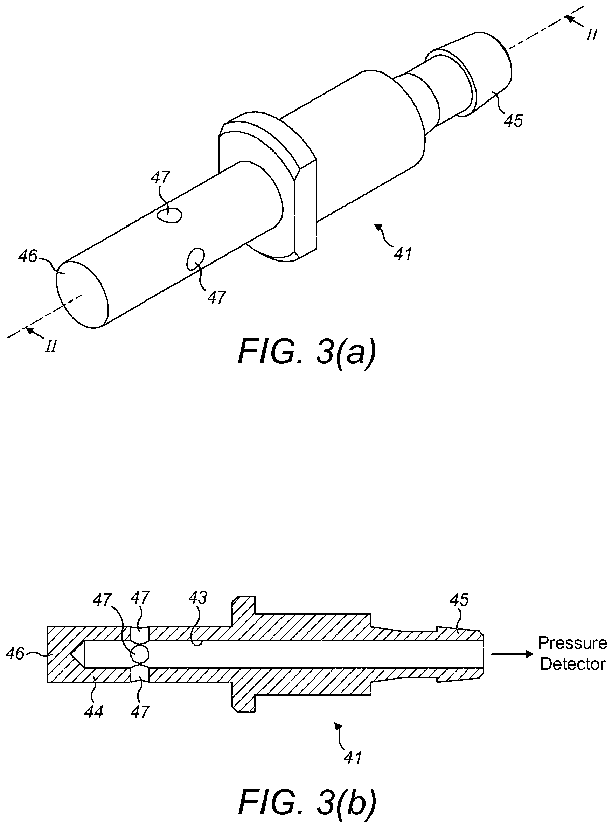

Figure 3(a) illustrates a perspective unit of one of the micro plenum chambers of the flow sensing system of the mechanical ventilation heat recovery unit of Figure 1; and
Figure 3(b) illustrates a longitudinal sectional view (along section II-II in Figure 3(a)) of the micro plenum chamber of Figure 3(a).

The mechanical ventilation heat recovery unit comprises a first flow path 5 through which a first, outfeed air flow F1 of air drawn from within an enclosed space is delivered, a second air flow path 7 through which a second, infeed air flow F2 of air drawn from outside the enclosed space is delivered, and a heat exchanger 9 which is fluidly connected to the first and second flow paths 5, 7 such that the first and second air flows F1, F2 pass through the heat exchanger 9 and heat from the first, outfeed air flow F1 is transferred to the second, infeed air flow F2, thereby raising the temperature of the second, infeed air flow F2.

In this embodiment the first flow path 5 has an inlet chamber 15 which is upstream of the heat exchanger 9, and an outlet chamber 17 which is downstream of the heat exchanger 9.

In this embodiment the inlet chamber 15 of the first flow path 5 includes a first filter 19, which filters material from the first, outfeed air flow F1 prior to passing through the heat exchanger 9. In this embodiment the first filter 19 is formed of a filter media.

In this embodiment the second flow path 7 has an inlet chamber 25 which is upstream of the heat exchanger 9, and an outlet chamber 27 which is downstream of the heat exchanger 9.

In this embodiment the inlet chamber 25 of the second flow path 7 includes a second filter 29, which filters material from the second, infeed air flow F2 prior to passing through the heat exchanger 9. In this embodiment the second filter 29 is formed of a filter media.

With this configuration, the filters 19, 29 prevent the transfer of material into and through the heat exchanger 9.

In this embodiment the heat exchanger 9 is a plate-type heat exchanger.

In this embodiment the first and second flow paths 5, 7 are fluidly isolated.

The mechanical ventilation heat recovery unit further comprises a flow measurement system 31.

In this embodiment the flow measurement system 31 comprises a first pressure tap 33a in the inlet chamber 15 of the first flow path 5, a second pressure tap 33b in the outlet chamber 17 of the first flow path 5, a third pressure tap 33c in the inlet chamber 25 of the second flow path 7, a fourth pressure tap 33d in the outlet chamber 27 of the second flow path 7, and at least one pressure detector 35 for detecting the pressures Pa, Pb, Pc, Pd at the first to fourth pressure taps 33a-d, which pressures Pa, Pb, Pc, Pd allow for a determination of the flow rates of the first and second air flows F1, F2, as will be described in more detail hereinbelow.

The present inventors have recognized that the flow restriction as provided by the heat exchanger 9 to each of the first and second air flows F1, F2 therethrough enables a simple and inexpensive determination of the flow rates of the first and second air flows F1, F2 by measurement of the pressure differentials ΔP1 (=Pa-Pb), ΔP2 (=Pc-Pd) between the respective ones of the first and second pressure taps 33a, b and the third and fourth pressure taps 33c, d. In requiring only measurement of pressure, the flow rates can be measured without requiring complex or expensive components.

In this embodiment the flow measurement system 31 comprises first to fourth pressure detectors 35a-d for detecting the pressures Pa, Pb, Pc, Pd at respective ones of the first'to fourth pressure taps 33a-d.

In this embodiment the flow measurement system 31 comprises a fifth pressure tap 33e in the inlet chamber 15 of the first flow path 5 at a location upstream of the first filter 19, with the first pressure tap 33a being located downstream of the first filter 19. With this arrangement, the flow rate through the first filter 19 can be determined simply and inexpensively by determination of the pressure differential ΔP3 (=Pe-Pa) between the first and fifth pressure taps 33a, e, which enables the state of the first filter 19 to be monitored, and allows for the requirement for replacement of the first filter 19 to be alerted.

In this embodiment the at least one pressure detector 35 detects the pressure at the fifth pressure tap 33e.

In one embodiment the flow measurement system 31 comprises a fifth pressure detector 35e for detecting the pressure Pe at the fifth pressure tap 33e.

In this embodiment the flow measurement system 31 comprises a sixth pressure tap 33f in the inlet chamber 25 of the second flow path 7 at a location upstream of the second filter 29, with the third pressure tap 33c being located downstream of the second filter 29. With this arrangement, the flow rate through the second filter 29 can be determined simply and inexpensively by determination of the pressure differential ΔP4 (=Pf-Pc) between the third and sixth pressure taps 33c, f, which enables the state of the second filter 29 to be monitored, and allows for the requirement for replacement of the second filter 29 to be alerted.

In one embodiment the flow measurement system 31 comprises a sixth pressure detector 35f for detecting the pressure Pf at the sixth pressure tap 33f.

In this embodiment the pressure taps 33a-f each include a micro plenum chamber 41 for smoothing the sensed pressure.

In this embodiment the micro plenum chamber 41 comprises an elongate channel 43 having a distal region 44 which projects into the respective inlet or outlet chamber 15, 17, 25, 27, and a proximal region 45 to which tubing is fluidly connected.

In this embodiment the channel 43 is an elongate linear channel, here projecting substantially orthogonally to the adjacent surface of the respective inlet or outlet chamber 15, 17, 25, 27.

In this embodiment the channel 43 has a closed distal end 46, and at least one sensing aperture 47, which opens substantially radially.

In this embodiment the at least one sensing aperture 47 is located proximal to the distal end 46 of the channel 43, here by a distance of at least 10 mm.

In this embodiment the channel 43 has a radial dimension, here an internal diameter, of between 2 mm and 5 mm.

In this embodiment the at least one sensing aperture 47 has a radial dimension, here an internal diameter, which is smaller than the radial dimension of the channel 43.

In this embodiment the at least one sensing aperture 47 has a radial dimension of between 1 mm and 3 mm.

In this embodiment the channel 43 has a plurality of sensing apertures 47.

In this embodiment the sensing apertures 47 are disposed in spaced relation about the periphery of the channel 43.

Finally, it will be understood that the present invention has been described in its preferred embodiments and can be modified in many different ways without departing from the scope of the invention as defined by the appended claims.

## Claims

1. A mechanical ventilation heat recovery unit for ventilating an enclosed space to an external environment, the unit comprising:
a first flow path (5) through which a first, outfeed air flow (F1) of air drawn from within the enclosed space is delivered;
a second air flow path (7) through which a second, infeed air flow (F2) of air drawn from the external environment is delivered;
a heat exchanger (9) which is fluidly connected to the first and second flow paths (5, 7) such that the first and second air flows (F1, F2) pass through the heat exchanger (9) and heat from the first air flow (F1) is transferred to the second air flow (F2), thereby raising the temperature of the second air flow (F2);
wherein the first flow path (5) has an inlet chamber (15) which is upstream of the heat exchanger (9), and an outlet chamber (17) which is downstream of the heat exchanger (9);
wherein the second flow path (7) has an inlet chamber (25) which is upstream of the heat exchanger (9), and an outlet chamber (27) which is downstream of the heat exchanger (9); and
a flow measurement system (31) for measuring the flow rates of the first and second air flows (F1, F2), wherein the flow measurement system (31) comprises a first pressure tap (33a) in the inlet chamber (15) of the first flow path (5), a second pressure tap (33b) in the outlet chamber (17) of the first flow path (5), a third pressure tap (33c) in the inlet chamber (25) of the second flow path (7), a fourth pressure tap (33d) in the outlet chamber (27) of the second flow path (7), and at least one pressure detector (35) for detecting the pressures (Pa, Pb, Pc, Pd) at the first to fourth pressure taps (33a-d), with the flow rates of the first and second air flows (F1, F2) being determined by the pressure differentials (ΔP1, ΔP2) between the pressures (Pa, Pb, Pc, Pd) at respective ones of the first and second pressure taps (33a, b) and the third and fourth pressure taps (33c, d);
**characterized in that** the pressure taps (33) each include a micro plenum chamber (41) for smoothing the sensed pressure, and the micro plenum chamber (41) comprises an elongate channel (43) having a distal region which projects into the respective inlet or outlet chamber (15, 25; 17; 27), and a proximal region (45) to which the at least one pressure detector (35) is fluidly connected.

2. The unit of claim 1, wherein the flow measurement system (31) comprises first to fourth pressure detectors (35a-d) for separately detecting the pressures (Pa, Pb, Pc, Pd) at respective ones of the first to fourth pressure taps (33a-d).

3. The unit of claim 1, wherein the flow measurement system (31) comprises one or more pressure detectors (35; 35a-d) for selectively detecting the pressures (Pa, Pb, Pc, Pd) at respective ones of the first to fourth pressure taps (33a-d).

4. The unit of any of claims 1 to 3, wherein the inlet chamber (15) of the first flow path (5) includes a first filter (19) upstream of the first pressure tap (33a), the flow measurement system (31) comprises a fifth pressure tap (33e) in the inlet chamber (15) of the first flow path (5) at a location upstream of the first filter (19), and the at least one pressure detector (35) detects the pressure (Pe) at the fifth pressure tap (33e), with the state of the first filter (19) being determined from the pressure differential (ΔP3) between the first and fifth pressure taps (33a, e), optionally the flow measurement system (31) comprises a fifth pressure detector (35a) for detecting the pressure at the fifth pressure tap (33e).

5. The unit of any of claims 1 to 4, wherein the inlet chamber (25) of the second flow path (7) includes a second filter (29) upstream of the third pressure tap (33c), the flow measurement system (31) comprises a sixth pressure tap (33f) in the inlet chamber (25) of the second flow path (7) at a location upstream of the second filter (29), and the at least one pressure detector (35) detects the pressure (Pf) at the sixth pressure tap (33f), with the state of the second filter (29) being determined from the pressure differential (ΔP4) between the first and sixth pressure taps (33a, f), optionally the flow measurement system (31) comprises a sixth pressure detector (35f) for detecting the pressure at the sixth pressure tap (33f).

6. The unit of any of claims 1 to 5, wherein the heat exchanger (9) is a plate-type heat exchanger.

7. The unit of any of claims 1 to 6, wherein the first and second flow paths (5, 7) are fluidly isolated.

8. The unit of any of claims 1 to 7, wherein the channel (43) is an elongate linear channel, optionally projecting substantially orthogonally to the adjacent surface of the respective inlet or outlet chamber (15, 25; 17, 27).

9. The unit of claim 8, wherein the channel (43) has a closed distal end (46), and at least one sensing aperture (47), which opens substantially radially, optionally the at least one sensing aperture (47) is located proximal to the distal end (46) of the channel (43), optionally by a distance of at least 10 mm.

10. The unit of claim 9, wherein the at least one sensing aperture (47) has a radial dimension which is smaller than a radial dimension of the channel (43).

11. The unit of claim 9 or 10, wherein the at least one sensing aperture (47) has a radial dimension of between 1 mm and 3 mm.

12. The unit of any of claims 9 to 11, wherein the channel (43) has a plurality of sensing apertures (47), optionally the sensing apertures (47) are disposed in spaced relation about the periphery of the channel (43).

13. The unit of any of claims 8 to 12, wherein the channel (43) has a radial dimension of between 2 mm and 5 mm.

## Patentansprüche

1. Mechanische Ventilations-Wärme-Rückgewinnungs-Einheit zur Belüftung eines umschlossenen Raums gegenüber einer äußeren Umgebung, worin die Einheit umfasst:
einen ersten Strömungsweg (5), durch den ein erster, nach außen geführter Luftstrom (F1) von Luft, die aus dem umschlossenen Raum entnommen wurde, geführt wird;
einen zweiten Luft-Strömungsweg (7), durch den ein zweiter, nach innen geführter Luftstrom (F2) von Luft, die aus der äußeren Umgebung genommen wird, geführt wird;
einen Wärmetauscher (9), der mit dem ersten und zweiten Strömungsweg (5, 7) fluid verbunden ist, so dass der erste und zweite Luftstrom (F1, F2) durch den Wärmetauscher (9) gelangt und Wärme von dem ersten Luftstrom (F1) zu dem zweiten Luftstrom (F2) übertragen wird, wodurch die Temperatur des zweiten Luftstroms (F2) erhöht wird;
worin der erste Strömungsweg (5) eine Einlasskammer (15) aufweist, die stromaufwärts des Wärmetauschers (9) vorgesehen ist, und eine Auslaßkammer (17), die stromabwärts des Wärmetauschers (9) vorgesehen ist;
worin der zweite Strömungsweg (7) eine Einlasskammer (25) aufweist, die stromaufwärts des Wärmetauschers (9) vorgesehen ist, und eine Auslaßkammer (27), die stromabwärts des Wärmetauschers (9) vorgesehen ist; und
ein Strömungs-Bestimmungssystem (31) zur Bestimmung der Strömungsgeschwindigkeiten des ersten und zweiten Luftstroms (F1, F2), worin das Strömungs-Bestimmungssystem (31) umfasst, einen ersten Druckmessstutzen (33a) in der Einlasskammer (15) des ersten Strömungswegs (5), einen zweiten Druckmessstutzen (33b) in der Auslaßkammer (17) des ersten Strömungswegs (5), einen dritten Druckmessstutzen (33c) in der Einlasskammer (25) des zweiten Strömungswegs (7), einen vierten Druckmessstutzen (33d) in der Auslaßkammer (27) des zweiten Strömungsweg (7), und mindestens einen Druck-Detektor (35) zum Erfassen der Drücke (Pa, Pb, Pc, Pd) an dem ersten bis vierten Druckmessstutzen (33a-d), wobei die Strömungsgeschwindigkeiten des ersten und zweiten Luftstroms (F1, F2) anhand von Druckunterschieden (ΔP1, ΔP2) zwischen den Drücken (Pa, Pb, Pc, Pd) an jeweils dem erste und zweiten Druckmessstutzens (33a, b) und dem dritten und vierte Druckmessstutzen (33c, d) bestimmt werden;
**dadurch gekennzeichnet, dass** die Druckmessstutzen (33) jeweils einen Mikro-Ansaugluftsammler (41) zum Egalisieren des erfassten Drucks umfassen, und der Mikro-Ansaugluftsammler (41) einen länglichen Kanal (43) umfasst, mit einem distales Bereich, der in die jeweilige Einlaß- oder Auslaß-Kammer (15, 25; 17; 27) hineinreicht, und mit einem proximalen Bereich (45), mit dem der mindestens eine Druck-Detektor (35) fluid verbunden ist.

2. Einheit nach Anspruch 1, worin das Strömungs-Bestimmungssystem (31) erste bis vierte Druck-Detektoren (35a-d) umfasst, um separat die Drücke (Pa, Pb, Pc, Pd) an jeweils einem der ersten bis vierten Druckmessstutzen (33a-d) zu erfassen.

3. Einheit nach Anspruch 1, worin das Strömungs-Bestimmungssystem (31) ein oder mehrere Druck-Detektoren (35; 35a-d) umfasst, um selektiv die Drücke (Pa, Pb, Pc, Pd) an jeweils einem der ersten bis vierten Druckmessstutzen (33a-d) zu erfassen.

4. Einheit nach einem der Ansprüche 1 bis 3, worin die Einlasskammer (15) des ersten Strömungswegs (5) einen ersten Filter (19) stromaufwärts des ersten Druckmessstutzens (33a) umfasst, worin das Strömungs-Bestimmungssystem (31) einen fünften Druckmessstutzen (33e) in der Einlasskammer (15) des ersten Strömungswegs (5) an einer Stelle stromaufwärts des ersten Filters (19) umfasst, und worin der mindestens eine Druck-Detektor (35) den Druck (Pe) an dem fünften Druckmessstutzen (33e) erfasst, wobei der Zustand des ersten Filters (19) aus dem Druckunterschied (ΔP3) zwischen dem erste und fünften Druckmessstutzen (33a, e) bestimmt wird, wahlweise worin das Strömungs-Bestimmungssystem (31) einen fünften Druck-Detektor (35a) umfasst, um den Druck an dem fünften Druckmessstutzen (33e) zu erfassen.

5. Einheit nach einem der Ansprüche 1 bis 4, worin die Einlasskammer (25) des zweiten Strömungswegs (7) einen zweiten Filter (29) stromaufwärts des dritten Druckmessstutzen (33c) umfasst, worin das Strömungs-Bestimmungssystem (31) einen sechsten Druckmessstutzen (33f) in der Einlasskammer (25) des zweiten Strömungswegs (7) an einer Stelle stromaufwärts des zweiten Filters (29) umfasst, und worin der mindestens eine Druck-Detektor (35) den Druck (Pf) an dem sechsten Druckmessstutzen (33f) erfasst, wobei der Zustand des zweiten Filters (29) aus dem Druckunterschied (ΔP4) zwischen dem ersten und sechsten Druckmessstutzen (33a, f) bestimmt wird, wahlweise worin das Strömungs-Bestimmungssystem (31) einen sechsten Druck-Detektor (35f) umfasst, um den Druck an dem sechsten Druckmessstutzen (33f) zu erfassen.

6. Einheit nach einem der Ansprüche 1 bis 5, worin der Wärmetauscher (9) ein Wärmetauscher vom Platten-Typ ist.

7. Einheit nach einem der Ansprüche 1 bis 6, worin der erste und zweite Strömungsweg (5, 7) fluid isoliert sind.

8. Einheit nach einem der Ansprüche 1 bis 7, worin der Kanal (43) ein länglicher linearer Kanal ist, welcher wahlweise im Wesentlichen orthogonal zu der benachbarten Oberfläche der jeweiligen Einlaß- oder Auslaß-Kammer (15, 25; 17, 27) vorsteht.

9. Einheit nach Anspruch 8, worin der Kanal (43) ein geschlossenes distales Ende (46) aufweist, und mindestens eine Erfassungsöffnung (47), welche sich im Wesentlichen radial öffnet, wahlweise worin die mindestens eine Erfassungsöffnung (47) proximal zu dem distalen Ende (46) des Kanals (43) angeordnet ist, wahlweise in einer Entfernung von mindestens 10 mm.

10. Einheit nach Anspruch 9, worin die mindestens eine Erfassungsöffnung (47) radiale Abmessungen aufweist, die kleiner sind als eine radiale Abmessung des Kanals (43).

11. Einheit nach Anspruch 9 oder 10, worin die mindestens eine Erfassungsöffnung (47) radiale Abmessungen von zwischen 1 mm und 3 mm aufweist.

12. Einheit nach einem der Ansprüche 9 bis 11, worin der Kanal (43) mehrere Erfassungsöffnungen (47) aufweist, wahlweise worin die Erfassungsöffnungen (47) beabstandet zueinander um den Umfang des Kanals (43) angeordnet sind.

13. Einheit nach einem der Ansprüche 8 bis 12, worin der Kanal (43) radiale Abmessungen von zwischen 2 mm und 5 mm aufweist.

## Revendications

1. Unité de récupération de chaleur par ventilation mécanique pour ventiler un espace clos vers un environnement externe, l'unité comprenant :
un premier trajet d'écoulement (5) par lequel un premier écoulement d'air de sortie (F1), d'air aspiré de l'intérieur de l'espace clos, est délivré ;
un second trajet d'écoulement d'air (7) par lequel un second écoulement d'air d'entrée (F2), d'air aspiré de l'environnement externe, est délivré ;
un échangeur de chaleur (9) qui est relié de manière fluidique aux premier et second trajets d'écoulement (5, 7) de telle sorte que les premier et second écoulements d'air (F1, F2) passent à travers l'échangeur de chaleur (9) et de la chaleur provenant du premier écoulement d'air (F1) est transférée au second écoulement d'air (F2), élevant ainsi la température du second écoulement d'air (F2) ;
le premier trajet d'écoulement (5) ayant une chambre d'entrée (15) qui est en amont de l'échangeur de chaleur (9), et une chambre de sortie (17) qui est en aval de l'échangeur de chaleur (9) ;
le second trajet d'écoulement(7) ayant une chambre d'entrée (25) qui est en amont de l'échangeur de chaleur (9), et une chambre de sortie (27) qui est en aval de l'échangeur de chaleur (9) ; et
un système de mesure de débit (31) pour mesurer les débits des premier et second écoulements d'air (F1, F2), le système de mesure de débit (31) comprenant une première prise de pression (33a) dans la chambre d'entrée (15) du premier trajet d'écoulement (5), une deuxième prise de pression (33b) dans la chambre de sortie (17) du premier trajet d'écoulement (5), une troisième prise de pression (33c) dans la chambre d'entrée (25) du second trajet d'écoulement (7), une quatrième prise de pression (33d) dans la chambre de sortie (27) du second trajet d'écoulement (7), et au moins un détecteur de pression (35) pour détecter les pressions (Pa, Pb, Pc, Pd) aux première à quatrième prises de pression (33a-d), les débits des premier et second écoulements d'air (F1, F2) étant déterminés par les différentiels de pression (ΔP1, ΔP2) entre les pressions (Pa, Pb, Pc, Pd) à des prises respectives des première et deuxième prises de pression (33a,b) et des troisième et quatrième prises de pression (33c,d) ;
**caractérisé par le fait que** les prises de pression (33) comprennent chacune une micro-chambre de répartition d'air (41) pour lisser la pression détectée, et la micro-chambre de répartition d'air (41) comprend un canal allongé (43) ayant une région distale qui fait saillie dans la chambre d'entrée ou de sortie respective (15, 25 ; 17, 27), et une région proximale (45) à laquelle l'au moins un détecteur de pression (35) est relié de manière fluidique.

2. Unité selon la revendication 1, dans laquelle le système de mesure de débit (31) comprend des premier à quatrième détecteurs de pression (35a-d) pour détecter séparément les pressions (Pa, Pb, Pc, Pd) à des prises respectives des première à quatrième prises de pression (33a-d).

3. Unité selon la revendication 1, dans laquelle le système de mesure de débit (31) comprend un ou plusieurs détecteurs de pression (35 ; 35a-d) pour détecter de manière sélective les pressions (Pa, Pb, Pc, Pd) à des prises respectives des première à quatrième prises sous pression (33a-d).

4. Unité selon l'une quelconque des revendications 1 à 3, dans laquelle la chambre d'entrée (15) du premier trajet d'écoulement (5) comprend un premier filtre (19) en amont de la première prise de pression (33a), le système de mesure de débit (31) comprend une cinquième prise de pression (33e) dans la chambre d'entrée (15) du premier trajet d'écoulement (5) à un emplacement en amont du premier filtre (19), et l'au moins un détecteur de pression (35) détecte la pression (Pe) à la cinquième prise de pression (33e), l'état du premier filtre (19) étant déterminé à partir du différentiel de pression (ΔP3) entre les première et cinquième prises de pression (33a,e), facultativement le système de mesure de débit (31) comprend un cinquième détecteur de pression (35a) pour détecter la pression à la cinquième prise de pression (33e).

5. Unité selon l'une quelconque des revendications 1 à 4, dans laquelle la chambre d'entrée (25) du second trajet d'écoulement (7) comprend un second filtre (29) en amont de la troisième prise de pression (33c), le système de mesure de débit (31) comprend une sixième prise de pression (33f) dans la chambre d'entrée (25) du second trajet d'écoulement (7) à un emplacement en amont du second filtre (29), et l'au moins un détecteur de pression (35) détecte la pression (Pf) à la sixième prise de pression (33f), l'état du second filtre (29) étant déterminé à partir du différentiel de pression (ΔP4) entre les première et sixième prises de pression (33a,f), facultativement le système de mesure de débit (31) comprend un sixième détecteur de pression (35f) pour détecter la pression à la sixième prise de pression (33f).

6. Unité selon l'une quelconque des revendications 1 à 5, dans laquelle l'échangeur de chaleur (9) est un échangeur de chaleur de type à plaques.

7. Unité selon l'une quelconque des revendications 1 à 6, dans laquelle les premier et second trajets d'écoulement (5, 7) sont isolés de manière fluidique.

8. Unité selon l'une quelconque des revendications 1 à 7, dans laquelle le canal (43) est un canal linéaire allongé, faisant facultativement saillie sensiblement orthogonalement à la surface adjacente de la chambre d'entrée ou de sortie respective (15, 25 ; 17, 27).

9. Unité selon la revendication 8, dans laquelle le canal (43) a une extrémité distale fermée (46), et au moins une ouverture de détection (47), qui s'ouvre sensiblement radialement, facultativement l'au moins une ouverture de détection (47) est située de manière proximale à l'extrémité distale (46) du canal (43), facultativement à une distance d'au moins 10 mm.

10. Unité selon la revendication 9, dans laquelle l'au moins une ouverture de détection (47) a une dimension radiale qui est plus petite qu'une dimension radiale du canal (43).

11. Unité selon la revendication 9 ou 10, dans laquelle l'au moins une ouverture de détection (47) a une dimension radiale comprise entre 1 mm et 3 mm.

12. Unité selon l'une quelconque des revendications 9 à 11, dans laquelle le canal (43) a une pluralité d'ouvertures de détection (47), facultativement les ouvertures de détection (47) sont disposées en relation espacée autour de la périphérie du canal (43).

13. Unité selon l'une quelconque des revendications 8 à 12, dans laquelle le canal (43) a une dimension radiale comprise entre 2 mm et 5 mm.
